# EUROPÄISCHE PATENTANMELDUNG

(11) **EP 1 717 210 A1**
(43) Veröffentlichungstag der Anmeldung: **02.11.2006**
(21) Anmeldenummer: 06112902.9
(22) Anmeldetag: 21.04.2006
(51) Int. Cl.: C03B 5/237, C03B 5/235, F23L 15/02

(54) **Verfahren zur Optimierung eines Verbrennungsprozesses**

(30) Priorität: 25.04.2005 DE 102005019147
(71) Anmelder: SIEMENS AKTIENGESELLSCHAFT, 80333 München (DE)
(72) Erfinder: Garbe, Hanno, 91052, Erlangen (DE); Lengert, Jörg, 91475, Lonnerstadt (DE); Ohlhorst, Dirk, 76149, Karlsruhe (DE); Saftig, Bernhard, 76764, Rheinzabern (DE); Steyer, Karlheinz, 65779, Kelkheim (DE)

(57) **Zusammenfassung**

Die Erfindung betrifft ein Verfahren zur Optimierung des Verbrennungsprozesses für einen Schmelzofen bei der Glasherstellung, insbesondere zum Aufschmelzen der Rohstoffe, wobei zur Verbrennungsluftvorwärmung mindestens ein Schüttgutregenerator (1,2,3) für Rauchgase (10) und/oder Frischgase (12) genutzt wird, wobei zwei Schüttgutregeneratoren (1,2) im Wechselbetrieb an einem Wärmeaustauschprozess arbeiten, wobei durch einen ersten Schüttgutregenerator (1) in einem Beladungsbetrieb (B) die Rauchgase (10) geleitet werden und durch einen zweiten Schüttgutregenerator (2) in einem Entladungsbetrieb (E) die Frischgase (12) geleitet werden. Mit einem dritten Schüttgutregenerator (3) in einem Wartebetrieb (W), welcher für eine Durchleitung von Rauch- oder Frischgasen (10,12) zuschaltfähig betrieben wird, wird das Temperaturverhalten der Verbrennungslufttemperatur optimiert.

## Beschreibung

Die Erfindung liegt auf dem Gebiet der Glasindustrie.

Die Erfindung betrifft ein Verfahren zur Optimierung des Verbrennungsprozesses für einen Schmelzofen bei der Glasherstellung, insbesondere zum Aufschmelzen der Rohstoffe, wobei zur Verbrennungsluftvorwärmung mindestens ein Schüttgutregenerator für Rauchgase und/oder Frischgase genutzt wird, wobei zwei Schüttgutregeneratoren im Wechselbetrieb an einem Wärmeaustauschprozess arbeiten, wobei durch einen ersten Schüttgutregenerator in einem Beladungsbetrieb die Rauchgase geleitet werden und durch einen zweiten Schüttgutregenerator in einem Entladungsbetrieb die Frischgase geleitet werden.

In der Glasindustrie ist zum Aufschmelzen der Rohstoffe zur Glasherstellung ein hoher Energieverbrauch erforderlich. Zur Senkung eines Primärenergieeinsatzes wird die benötigte Verbrennungsluft vorgewärmt. Um die notwendigen Temperaturen von bis zu 1650°C zu erreichen, werden die Wannen mit Gas und/oder Öl beheizt, wobei die zur Verbrennung notwendige Luft in Vorwärmkammern, den Regeneratoren, aufgeheizt wird. Die zum Vorwärmen notwendige Energie ist ein "Recyclingprodukt", sie stammt aus den heißen Abgasen. Eine glühende Glasschmelze verlässt den eigentlichen Ofen und wird in eine so genannte Arbeitswanne geführt, wo sie auf die Verarbeitungstemperatur abgekühlt wird.

In der Glasindustrie wird also die Energie der heißen Rauchgase zur Verbrennungsluftvorwärmung genutzt. Hierbei werden die Rauchgase in der Glasindustrie in einen aus Schamottesteinen bestehenden Wärmetauscher geleitet. Dabei wird ein Teil der im Rauchgas enthaltenen Energie an die Schamottesteine abgegeben. Diese Wärmetauscher dienen als Wärmespeicher. Da an beiden Seiten der Glaswanne oder des Ofens jeweils ein aus Schamottesteinen bestehender Wärmetauscher angeordnet ist, kann ein kontinuierlicher Schmelzprozess erfolgen, indem eine wechselseitige Fahrweise zwischen den Wärmetauschern erfolgt. Durch einen solchen Aufbau können die entstehenden Rauchgase aus dem Schmelzprozess bis auf ca. 520°C abgekühlt werden. Um noch mehr Energie aus den Rauchgasen nutzen zu können, ging man dazu über, hinter den Wärmetauscher einen Abhitzekessel zur Dampferzeugung zu installieren. Der so erzeugte Dampf wird dann z.B. in einer Kondensationsturbine zur Herstellung von elektrischer Energie genutzt. Bei der Konvertierung von Wärmeenergie in elektrische Energie wird bekanntlich nur ein sehr geringer Wirkungsgrad erreicht.

Aufgrund der Wärmespeichercharakteristik der aus Schamottesteinen bestehenden Wärmetauscher kann die Verbrennungslufttemperatur nicht konstant gehalten werden. Die Verbrennungslufttemperatur fällt über der Zeit kontinuierlich ab, so dass der Primärenergieverbrauch während eines Schmelzvorganges kontinuierlich steigt.

Aus US 4,807,695 A, US 4,478,627 A, US 4,369,834 A und US 5,488,915 A sind Verfahren und Vorrichtungen zur Verbrennungsluftvorwärmung bekannt.

US 6,036,486 A beschreibt ein Verfahren und eine Vorrichtung mit zwei Regeneratoren, welche zur Verbrennungsluftvorwärmung im Wechselbetrieb betrieben werden.

Die Aufgabe der vorliegenden Erfindung besteht darin, durch ein Verfahren für den Betrieb einer Verbrennungsluftvorwärmungsanlage den Verbrennungsprozess bei der Glasschmelze zu optimieren und dadurch einen weitestgehend kontinuierlichen Schmelzprozess zu gewährleisten.

Die Aufgabe wird erfindungsgemäß dadurch gelöst, dass ein dritter Schüttgutregenerator in einem Wechselbetrieb für eine Durchleitung von Rauch- oder Frischgasen zuschaltfähig betrieben wird. Dieses Verfahren ermöglicht ein nahtloses Umschalten der Luftströmungen durch die Regeneratoren und dadurch wird eine nahezu konstante Verbrennungslufttemperatur erreicht. Mit einem dritten Schüttgutregenerator in einem Wartebetrieb, wobei der dritte Schüttgutregenerator für eine Durchleitung von Rauch- oder Frischgasen zuschaltfähig betrieben wird, kann Der Prozess der Verbrennungsluftvorwärmung kann so optimal gefahren werden, insbesondere in Hinblick auf eine längere Anlagen-Betriebszeit.

Eine weitere Optimierung wird durch einen Schüttgutregenerator mit einer gegenüber einer schüttgutfreien Vorwärmkammer erhöhten Wärme-Speichercharakteristik, insbesondere mit einer erhöhten spezifischen Wärmekapazität, eingesetzt. Die Wärme-Speichercharakteristik dieser Schüttgutregeneratoren liefert abschnittsweise eine vorzugsweise konstante Verbrennungslufttemperatur. Aus EP 0 908 692 A2 sind solche Schüttgutregeneratoren bereits bekannt.

Vorteilhafterweise ist bei Vorhandensein von mindestens drei Schüttgutregeneratoren, jeder dieser Schüttgutregeneratoren in jeder der Betriebsphasen Beladungsbetrieb, Entladungsbetrieb und Wartebetrieb, betreibbar.

Unter Betriebsphasen eines Schüttgutregenerators sind insbesondere folgende Betriebsphasen zu verstehen: Ein Beladungsbetrieb, ein Entladungsbetrieb und ein Wartebetrieb.

In einem Beladungsbetrieb werden die heißen ungereinigten Rauchgase durch einen Schüttgutregenerator geleitet. Das Durchleiten der heißen Rauchgase lässt die in den Rauchgasen enthaltene Wärmeenergie an das speicherfähige Schüttgutmaterial abgeben. Unter Beladungsbetrieb ist also die Aufnahme von Wärmeenergie in einen Schüttgutregenerator zu verstehen. Im Entladungsbetrieb hingegen werden kalte Frischgase durch einen zuvor aufgeheizten Schüttgutregenerator geführt. Die kalten Frischgase können die zuvor in dem Schüttgutregenerator gespeicherte Wärme aufnehmen und weiter zu einem Verbrennungsprozess geführt werden.

Ein Schüttgutregenerator im Wartebetrieb wird ständig zuschaltfähig betrieben um an dem Wärmeaustauschprozess für die Verbrennungsluftvorwärmung teilzunehmen.

In einer besonders vorteilhaften Ausgestaltung der Erfindung arbeiten die Schüttgutregeneratoren im Wechselbetrieb an einem Wärmeaustauschprozess, wobei die Betriebsphasen der Schüttgutregeneratoren mit einem Wechselintervall wie folgt gewechselt werden: Der Schüttgutregenerator im Beladungsbetrieb wechselt in den Entladungsbetrieb, der Schüttgutregenerator im Entladungsbetrieb wechselt in den Wartebetrieb, der Schüttgutregenerator im Wartebetrieb wechselt in den Beladungsbetrieb. Dieser zyklische Wechselbetrieb von mindestens drei Schüttgutregeneratoren hat den Vorteil, dass jeder Schüttgutregenerator gleichmäßig mit Betriebsstunden beaufschlagt wird und somit eine gleichmäßige Abnutzung der Schüttgutregeneratoren gegeben ist.

In einer anderen Ausführungsform der Erfindung wird einer der Schüttgutregeneratoren in der Betriebsphase Wartebetrieb betrieben und zwei Schüttgutregeneratoren solange im Wechselbetrieb mit einem Wechselintervall wie folgt gewechselt: "Der Schüttgutregenerator im Beladungsbetrieb wechselt in den Entladungsbetrieb, der Schüttgutregenerator im Entladungsbetrieb wechselt in den Beladungsbetrieb", bis bei einer Umschaltbedingung wie folgt gewechselt wird: "Der Schüttgutregenerator im Entladungsbetrieb wechselt in den Wartebetrieb, der Schüttgutregenerator im Wartebetrieb wechselt in den Beladungsbetrieb, der Schüttgutregenerator im Beladungsbetrieb wechselt in den Entladungsbetrieb." Von Vorteil an dieser Verfahrensweise ist es, dass ein dritter Schüttgutregenerator im "Stand-by-Betrieb" auf eine Zuschaltung wartet, falls einer von den anderen beiden Schüttgutregeneratoren ausfallen sollte. Des Weiteren schafft der Wechselbetrieb für einen Wärmeaustauschprozess zwischen zwei Schüttgutregeneratoren die Möglichkeit für eine Reparatur oder Austausch eines dritten Schüttgutregenerators. Somit kann die Forderung nach einer kontinuierlichen Verbrennungsluftvorwärmung aufrechterhalten werden und die Ausfallsicherheit einer solchen Anlage steigt immens.

Nach einer weiteren Ausgestaltungsform wird ein Druckunterschied zwischen den eingeleiteten Gasen und den ausgeleiteten Gasen im Schüttgutregenerator oder in einer Zu- und/oder Ableitung gemessen und als Umschaltbedingung genutzt. Mit einem Messen der Drücke im Schüttgutregenerator kann ein Verschmutzungsgrad oder eine Störung eines Schüttgutregenerators ermittelt werden. Mit Vorteil wird die Druckdifferenz zwischen Eingang und Ausgang eines Schüttgutregenerators ermittelt und anhand eines Grenzwertes kann daraus beispielsweise abgeleitet werden, ob der Schüttgutregenerator gereinigt werden muss oder nicht.

Bevorzugt beträgt das Wechselintervall beim Wechselbetrieb einige Minuten bis zu einigen Tagen, vorzugsweise weniger als 24 Stunden und/oder mehr als fünf Minuten. Für eine optimale kontinuierliche Verbrennungsluftvorwärmung kann anlagenspezifisch ein optimales Wechselintervall bestimmt werden. Der Betrieb einer Verbrennungsluftvorwärmanlage mit einem optimalen Wechselintervall garantiert einen minimalen Einsatz von Primärenergie.

Zusätzlich hält gemäß einer weiteren vorteilhaften Ausführungsform der Erfindung ein Schüttgutregenerator Stäube und Asche zurück, wobei vorzugsweise keine gesonderte nachgeschaltete Filtereinrichtung oder Entstaubungsanlage verwendet wird, insbesondere kein elektrostatisches Filter, oder wobei eine nachgeschaltete Entstaubungsanlage verwendet wird, deren Leistungsfähigkeit geringer ausgelegt ist, als eine vergleichbare Filtereinrichtung bei einer schüttgutfreien Vorwärmkammer. Der Einsatz einer üblicherweise großen Entstaubungsanlage für gleichzeitig sehr hohe Temperaturen (z.B. größer 450°C) kann entscheidend hinsichtlich Größe, Temperaturbeanspruchung und Kosten, sowohl Investitions- als auch Betriebskosten optimiert werden. Durch die Wahl von geeignetem Schüttgutmaterial, beispielsweise Schüttgutmaterial mit Sorbentien zum Abscheiden gasförmiger Verunreinigungen, kann die Reinigungswirkung der Rauchgase optimiert werden. Dadurch wird das Rauchgas nicht nur von staubförmigen Verunreinigungen gereinigt, sondern auch das Gefährdungspotential gasförmiger Verunreinigungen herabgesetzt.

In einer bevorzugten Ausführungsform werden die Rauchgase bis auf eine Temperatur kleiner als 200°C, vorzugsweise kleiner als 100°C, abgekühlt. Eine hohe Abkühlung der Rauchgase bedeutet gleichzeitig eine große Wärmespeicherung in den Schüttgutregeneratoren, somit eine erhebliche Einsparung der Primärenergie.

In einer weiteren vorteilhaften Ausgestaltung wird eine Entstaubungsanlage genutzt, die für eine maximale Rauchgastemperatur von 200°C, vorzugsweise von maximal 100°C, ausgelegt ist.

Nach einer anderen bevorzugten Ausgestaltung der Erfindung wird zur Messung und/oder Regelung eines Restsauerstoffgehaltes und/oder eines Luftüberschusses, insbesondere der Falschluft, im Rauchgas eine Lambda-Regelung genutzt. Eine Einhaltung gesetzlicher NOx-Emissionswerte von ungefähr 500 bis 800 mg/m³ ist ohne kontinuierliche Kontrolle und/oder Regelung des Restsauerstoffgehaltes im Abgas nicht zuverlässig realisierbar. Eine damit zugleich erreichbare Vermeidung von Energieverlusten aus unkontrollierter Falschluftverbrennung ermöglicht die Finanzierung einer Lambda-Regelung bereits als Nebeneffekt der Energieeinsparung. Eine nahstöchiometrische Fahrweise mit sehr niedrigem, aber zuverlässig kontrolliertem Luftüberschuss ist der Schlüssel für eine effiziente und schadstoffarme Verbrennung in der Glasschmelzwanne.

Zweckmäßig ist, dass eine Lambdasonde, vorzugsweise eine Zirkonoxidsonde, für den Hochtemperaturbereich, verwendet wird. Zirkonoxidlambdasonden zeichnen sich durch eine hohe Lebensdauer aus. Schmelzöfen lassen sich mit Zirkonoxidlambdasonden in Kombination mit einer Lambda-Regelung energiesparend und schadstoffarm betreiben.

Eine weitere Optimierung des Verbrennungsprozesses erreicht man dadurch, dass eine Lambdasonde in einem Kammertopf nach einem Brennraum angeordnet verwendet wird.

Mit einem weiteren optionalen erfindungsgemäßen Merkmal wird der Verbrennungsprozess dahingehend optimiert, dass Mittel zur Beeinflussung der zugeführten Frischgasmenge und/oder der abgeführten Rauchgasmenge genutzt werden. Unter Mittel zur Beeinflussung der zugeführten Frischgasmenge und/oder Rauchgasmenge sind Ventile, Rauchklappen, Stellmotoren, Gebläse, Bypassleitungen, Lambdasonden, eine Lambdaregelung oder allgemeingültig gesagt Aktuatoren und Sensoren zu verstehen. Durch Ventile und/oder Rauchklappen kann beispielsweise eine überschüssige Frischluftmenge in einen Bypass-Kanal geführt werden.

Eine vorteilhafte Ausgestaltung ist, dass mit einer Brennstoffzusammensetzung eine Abgasanalyse ermittelt wird. Bei Kenntnis der Brennstoffzusammensetzung steht unter Zuhilfenahme von Rechen- und Analysesystemen eine vollständige Abgasanalyse der Rauchgase zur Verfügung.

Eine andere bevorzugte Ausgestaltung der Erfindung ist, dass durch genau einen Schüttgutregenerator oder durch eine Reihenschaltung und/oder eine Parallelschaltung von mehreren Schüttgutregeneratoren die Rauchgase und/oder Frischgase geleitet werden. Um sich optimal einer bestehenden Verbrennungsluftvorwärmungsanlage mit neuen Schüttgutregeneratoren anzupassen, kommt sowohl eine Reihenschaltung mehrerer hintereinander eingesetzter Schüttgutregeneratoren als auch eine Parallelschaltung und/oder eine Kombination aus Parallel- und Reihenschaltung von mehreren Schüttgutregeneratoren in Frage. Es kann somit sehr flexibel auf eine ganz bestimmte geforderte Wärmekapazität oder auf einen ganz bestimmten Wärmeaustauschbetrieb flexibel reagiert werden.

In einer weiteren vorteilhaften Ausgestaltung wird als Schüttgutregenerator ein Schüttgutregenerator mit Mitteln zur Reinigung des Schüttgutes verwendet. Eine regelmäßige Reinigung des Schüttgutes hat den besonderen Vorteil, dass die Durchströmungsmenge durch den Schüttgutregenerator nicht herabgesetzt wird.

Nach einer weiteren bevorzugten Ausgestaltung wird als Schüttgutregenerator ein Schüttgutregenerator mit Fördermitteln zum automatischen Rückführen von abgelassenem Schüttgut verwendet. Stehen Mittel zum automatischen Rückführen von abgelassenem Schüttgut zur Verfügung, so kann der gesamte Verfahrensprozess automatisiert werden und somit Kosten für Personal und Wartungsarbeiten eingespart werden.

Bevorzugte, jedoch keinesfalls einschränkende Ausführungsbeispiele der Erfindung werden nunmehr anhand der Zeichnung näher erläutert. Zur Verdeutlichung ist die Zeichnung nicht maßstäblich ausgeführt, und gewisse Merkmale sind nur schematisiert dargestellt. Im Einzelnen zeigt die
- FIG 1: eine Prinzipdarstellung einer Anlage zur Verbrennungsluftvorwärmung,
- FIG 2: ein erstes Ausführungsbeispiel eines zeitlichen Verlaufs von Betriebsphasen,
- FIG 3: ein zweites Ausführungsbeispiel eines zeitlichen Verlaufs der Betriebsphasen.

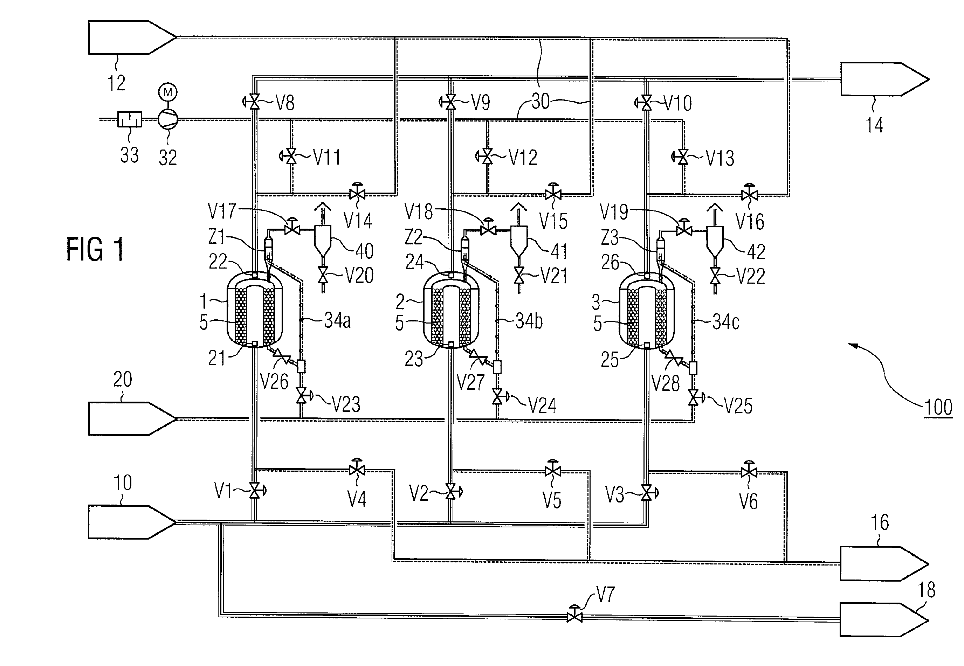

Einander entsprechende Teile sind in den Figuren 1 bis 3 mit denselben Bezugszeichen versehen.

In Figur 1 ist schematisch und ausschnittsweise eine Verbrennungsluftvorwärmanlage 100 dargestellt. Anstelle der klassischen Vorwärmkammern kommen hier erfindungsgemäß Schüttgutregeneratoren 1, 2 und 3 zum Einsatz. Die Schüttgutregeneratoren 1, 2 und 3 sind über ein Rohrleitungssystem 30 mit einer Rauchgaszuführung 10 für heiße Rauchgase, einer Frischgaszuführung 12 für kalte Frischluft, einer Rauchgasabführung 14 für die kalten Rauchgase, einer Frischgasabführung 16 für die vorgewärmte Verbrennungsluft und einem Rauchgasnebenstrom 18 verbunden. Eine Arbeitsluftzuführung 20 stellt Druckluft für Rückführleitungen 34a, 34b und 34c zur Verfügung. Die wesentlichste Aufgabe der Verbrennungsluftvorwärmanlage 100 ist es über die Frischgaszuführung 12 kalte Luft anzusaugen und über die Frischgasabführung 16 die so vorgewärmte Verbrennungsluft einem Verbrennungsprozess zuzuführen.

Ausgehend von einem zyklischen Wechselbetrieb der drei Schüttgutregeneratoren 1, 2 und 3 startet der erste Schüttgutregenerator 1 mit einer Beladungsphase E. Dies bedeutet, dass für ein Zeitintervall T durch den ersten Schüttgutregenerator 1 heiße Rauchgase über die Rauchgaszuführung 10 zugeführt werden. Dazu werden über ein nicht dargestelltes Automatisierungssystem und über einen Profibus, welcher das Automatisierungssystem mit den Ventilen verbindet, die Ventile V2 und V3 geschlossen. Hingegen ist das Ventil V1 in Durchlassrichtung geschaltet. So ist sichergestellt, dass die heißen Rauchgase nur durch den ersten Schüttgutregenerator 1 strömen. Die Ventile V2 und V3 blockieren die Strömungsrichtung für die Schüttgutregeneratoren 2 und 3. Ein Ventil V7 für eine Bypassleitung zum Rauchgasnebenstrom 18 bleibt vorläufig geschlossen und kann bedarfsweise geöffnet werden, um den Verbrennungsprozess zu optimieren. Die heißen Rauchgase 10, welche über das Ventil V1 durch den Schüttgutregenerator 1 geführt werden, müssen über ein offen gestelltes Ventil V8 in die Rauchgasabführung 14 geführt werden. An die Rauchgasabführung 14 schließt sich eine nicht dargestellte Rauchgasreinigungsanlage an.

Um einen Wärmeaustauschprozess im Wechselbetrieb zu gewährleisten ist der Schüttgutregenerator 2 im Entladungsbetrieb E. Hierzu werden die kalten Frischgase über den Frischgasanschluss 12, über ein Rohrleitungssystem 30 über Ventil 15 in den Schüttgutregenerator 2 geleitet. Voraussetzung hierfür ist der geschlossene Betrieb der Ventile V14 und V16. Ist die zugeführte Frischgasmenge nicht ausreichend, kann bedarfsweise über ein Gebläse 32 und ein Rohrleitungs- und Ventilsystem zusätzliche Frischluft zugeführt werden. Dem Gebläse 32 ist ein Luftfilter/Schalldämpfer zur Unterdrückung von Ausgangsgeräuschen vorgeschaltet. Für den Schüttgutregenerator 2 öffnet sich dann bedarfsweise das Ventil V12, somit steht ein Mittel zur Optimierung und Anpassung der Verbrennungsluftvorwärmung zur Verfügung. Der Schüttgutregenerator 2 befand sich vor dem Entladungsbetrieb E in einem Beladungsbetrieb B und ist somit thermisch aufgeheizt und kann über das Schüttgut 5 die gespeicherte Wärme an die Frischgase 12 abgeben. Für die Abgabe der gespeicherten Wärme an die Frischgase 12 ist es zwingend notwendig, dass das Ventil V5 in Durchlassrichtung betrieben wird und die Ventile V4 und V6 geschlossen sind. Nach Ablauf des Zeitintervalls T = 20 min, wechseln die Schüttgutregeneratoren 1 und 2 ihre Betriebsphasen. Der Schüttgutregenerator 1 war zuvor in der Betriebsphase Beladungsbetrieb B und wechselt nun in den Entladungsbetrieb E. Der Schüttgutregenerator 2 war zuvor im Entladungsbetrieb E und wechselt nun in den Beladungsbetrieb B. Zu diesem Zeitpunkt ist der Schüttgutregenerator 1 mit den über das Rohrleitungssystem 30 geführten heißen Rauchgasen "aufgeladen". Die in ihm gespeicherte Wärme kann er nun an die durch ihn geführte Kaltluft 12 wieder abgeben. Hierzu müssen die Ventile umgeschaltet werden. Das zuvor in Durchlassrichtung betriebene Ventil V1 wird nun geschlossen. Das zuvor in Sperrrichtung betriebene Ventil V4 wird nun geöffnet. Jetzt ist es möglich, über das geöffnete Ventil V14 die kalten Frischgase 12 durch den aufgeheizten Schüttgutregenerator 1 zu führen. Der Verlauf der kalten Frischgase 12 ist folgender: Über die Frischgaszuführung 12 gelangen die Frischgase, durch die gesperrten Ventile V15 und V16, über das in Durchlassrichtung geöffnete Ventil V14 in den Schüttgutregenerator 1; die Frischgase können sich hier thermisch aufheizen und werden über das in Durchlassrichtung betriebene Ventil V4 zur heißen Frischgasabführung 16 geleitet.

Der Wärmeaustauschprozess erfolgt nun im Wechselbetrieb der Schüttgutregeneratoren 1 und 2. Der dritte Schüttgutregenerator 3 verharrt bei dieser Betriebsart im Wartebetrieb W. Die eingesetzten Schüttgutregeneratoren 1, 2 und 3 besitzen die positive Eigenschaft Stäube und Asche zurückzuhalten. Am Beispiel von Schüttgutregenerator 3 wird ein Selbstreinigungsprozess der Schüttgutregeneratoren erklärt. Über eine Rückführleitung 34c für das Schüttgut 5 wird abgelassenes Schüttgut 5 automatisch in den Schüttgutregenerator 3 zurückgeführt. Zum Ablassen von Schüttgut 5 wird am Schüttgutregenerator 3 das Ventil V28 geöffnet. Über eine Rohrleitung kann nun Schüttgut in einen Vorratsbehälter abfließen. Das Ventil V25 wird geöffnet und die Arbeitsluft 20, welche als Druckluft zur Verfügung steht, kann über die Rückführungsleitung 34c das Schüttgut 5 nach oben befördern. Oberhalb des Schüttgutregenerators 3 ist ein Zyklon 3, welcher die Rückführleitung 34c, den Schüttgutregenerator 3 und eine Staubrückhalteeinrichtung 42 miteinander verbindet, angebracht. Siehe hierzu auch die Ausführungsbeispiele der europäischen Offenlegungsschrift EP 0 908 692 A2. Zurückgebliebene Stäube und Asche können über die Staubrückhalteeinrichtung 42 durch Öffnen des Ventils V22 abgelassen werden.

Die Schüttgutregeneratoren 1, 2 und 3 sind jeweils mit Drucksensoren 21, 22, 23, 24, 25 und 26 ausgestattet. Diese Drucksensoren liegen an der Eingangs- und Ausgangsseite der jeweiligen Schüttgutregeneratoren und sind mit dem Automatisierungssystem verbunden. Der Schüttgutregenerator 1 besitzt also einen Drucksensor 21 an der Einlassseite und einen Drucksensor 22 an der Auslassseite. Mittels der Drucksensoren 21 und 22 kann ein Differenzdruck zwischen der Eingangs- und der Ausgangsseite ermittelt werden. Dieser Differenzdruck darf einen Unterschied von 20 mbar nicht übersteigen. Ist der Differenzdruck größer als 20 mbar, so wird ein Umschaltkriterium U wirksam. Der Anstieg des Differenzdruckes im Schüttgutregenerator 1 ist ein Indikator für einen zu hohen Verschmutzungsgrad des Schüttgutregenerators 1. Der Schüttgutregenerator 1 muss nun in die Betriebsart "Wartebetrieb" gefahren werden und kann so dann gereinigt werden. Der zuvor geschilderte Wärmeaustauschprozess im Wechselbetrieb der Schüttgutregeneratoren 1 und 2 findet nun analog zwischen den Schüttgutregeneratoren 2 und 3 statt.

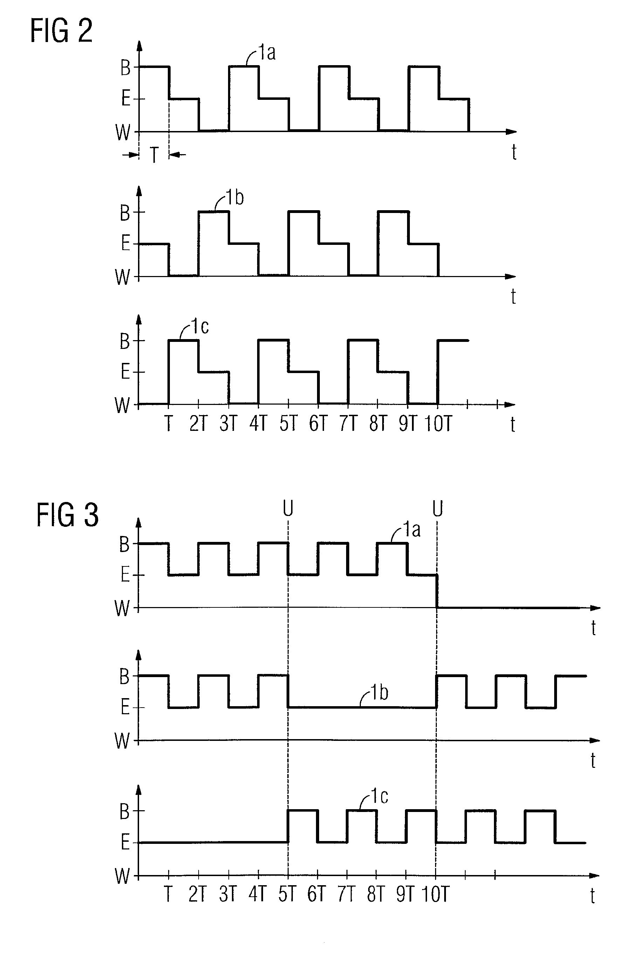

Figur 2 zeigt einen möglichen zeitlichen Verlauf der drei Betriebsphasen B, E und W für drei Schüttgutregeneratoren 1,2 und 3. Die drei Betriebsphasen B, E und W teilen sich in einen Beladungsbetrieb B, einen Entladungsbetrieb E und einen Wartebetrieb W auf. Eine Kurve 1a zeigt den zeitlichen Verlauf der Betriebsphasen B, E und W mit einem Wechselintervall T für den ersten Schüttgutregenerator 1. Mit der Kurve 1b ist der Verlauf des zweiten Schüttgutregenerators 2 der Betriebsphasen B, E und W über die Zeit aufgetragen. Die Kurve 1c zeigt den zeitlichen Verlauf der Betriebsphasen B, E und W des Schüttgutregenerators 3. Jeder Schüttgutregenerator 1, 2 und 3 wird in jeder der Betriebsphasen Beladungsbetrieb B, Entladungsbetrieb E und Wartebetrieb W, betrieben. Das Durchwechseln der Betriebsphasen B, E und W erfolgt im Kreis. Ein erstmaliges Anfahren des Vorwärmprozesses erfordert eine Startbedingung. Als Startbedingung wird festgelegt, dass der Schüttgutregenerator 1 mit dem Beladungsbetrieb B anfängt. Durch die Initiierung des Schüttgutregenerators 1 mit dem Beladungsbetrieb B arbeitet folglich der zweite Schüttgutregenerator 2 im Entladungsbetrieb E (siehe Kurve 1b). Während der erste Schüttgutregenerator 1 und der zweite Schüttgutregenerator 2 an dem Wärmeaustauschprozess aktiv teilnehmen, verharrt der dritte Schüttgutregenerator 3 im Wartebetrieb W. Bei dem gezeigten zeitlichen Verlauf der Betriebsphasen B, E und W wechseln die Betriebsphasen B, E und W der drei Schüttgutregeneratoren 1, 2 und 3 zirkular. Das bedeutet, nach einem für diese Anlage vorgegebenen Wechselintervall T, hier 20 min, werden die Betriebsphasen B, E und W der Schüttgutregeneratoren 1, 2 und 3 alle 20 min gewechselt. D.h. wurde die Anlage mit Schüttgutregenerator 1 im Beladungsbetrieb B gestartet, so muss Schüttgutregenerator 1 nach Ablauf des Wechselintervalls T von 20 min in den Entladungsbetrieb E wechseln. Ein Wechsel der Betriebsphase von Beladungsbetrieb B in den Entladungsbetrieb E hat zur Folge, dass sich die Strömungsrichtung in dem Schüttgutregenerator 1 umkehrt. Haben die zuvor durch den Schüttgutregenerator 1 geleiteten heißen Rauchgase 10 den Schüttgutregenerator 1 "aufgeladen", so kann er jetzt im Entladebetrieb E die gespeicherte Wärme an die durch ihn geführte Kaltluft 12 abgeben. Nach Ablauf des Wechselintervalls T = 20 min befindet sich der erste Schüttgutregenerator 1 im Entladungsbetrieb E, der zweite Schüttgutregenerator 2 befindet sich im Wartebetrieb W und der dritte Schüttgutregenerator 3 befindet sich im Beladungsbetrieb B.

Dieser zeitliche Verlauf der Betriebsphasen B, E und W ist mittels eines nicht gezeigten Automatisierungsgeräts automatisiert. Das Automatisierungsgerät steuert Ventile, Rauchklappen, Servomotoren und diverse Stellglieder an, wodurch die Schüttgutregeneratoren 1, 2 und 3 nahtlos in die drei Betriebsphasen Beladungsbetrieb B, Entladungsbetrieb E und Wartebetrieb W wechseln. Unter Zuhilfenahme des Automatisierungsgerätes ist der zeitliche Verlauf der Betriebsphasen schnell, einfach und flexibel für jede beliebige Anlagenkonfiguration anpassbar.

Figur 3 zeigt einen zweiten möglichen zeitlichen Verlauf der Betriebsphasen B, E und W der Schüttgutregeneratoren 1, 2 und 3. Abweichend von dem zirkularen Betrieb der Betriebsphasen in Figur 2 werden hier über einen längeren Zeitraum zwei Schüttgutregeneratoren ausschließlich im Wechselbetrieb betrieben. Die Kurve 1a des Schüttgutregenerators 1 und die Kurve 1b des Schüttgutregenerators 2 zeigen bis zur Zeit 5T einen Wechselbetrieb der Betriebsphasen Beladungsbetrieb B und Entladungsbetrieb E. Wieder ausgehend von einem Initialbetrieb, wird der Schüttgutregenerator 1 in der Betriebsphase Beladungsbetrieb B gestartet, zwangsläufig befindet sich der Schüttgutregenerator 2 im Entladungsbetrieb E. Nach Ablauf des Zeitintervalls T = 20 min wechseln die beiden Schüttgutregeneratoren 1 und 2 ihre Betriebsphasen B, E und W. Der Schüttgutregenerator 1 wechselt aus der Betriebsphase Beladungsbetrieb B in die Betriebsphase Entladungsbetrieb E. Zeitgleich wechselt der zweite Schüttgutregenerator 2 aus dem Entladungsbetrieb E in den Beladungsbetrieb B. Die Besonderheit an dem Betriebsphasenverlauf der drei Schüttgutregeneratoren 1, 2 und 3 ist hier, dass der dritte Schüttgutregenerator 3 wie Kurve 1c zeigt, sich über fünf Wechselintervalle T im Wartebetrieb W befindet. Bei der Zeit 5T, also 100 min, wird eine Umschaltbedingung U wirksam.

Die Umschaltbedingung U leitet sich aus einer Druckdifferenz im Schüttgutregenerator ab. Ist der Druckunterschied zwischen Eingangsdruck und Ausgangsdruck im Schüttgutregenerator größer als 50 mbar, vorzugsweise 20mbar, ist das ein eindeutiges Zeichen für einen zu hohen Verschmutzungsgrad des Schüttgutregenerators 2. Der Schüttgutregenerator 2 wechselt somit in den Wartebetrieb W. Der Schüttgutregenerator 2 kann nun unter anderem von Hand gewartet und gereinigt werden oder er wechselt in einen automatisierten Selbstreinigungsbetrieb. Für diesen Selbstreinigungsbetrieb steht ausreichend Zeit zur Verfügung, denn nun arbeiten die Schüttgutregeneratoren 1 und 3 im Wechselbetrieb an einem Wärmeaustauschprozess. Wird erneut die Umschaltbedingung U durch einen zu hohen Druckunterschied in einem beliebigen Schüttgutregenerator wirksam, so wird erneut umgeschaltet.

## Patentansprüche

1. Verfahren zur Optimierung des Verbrennungsprozesses für einen Schmelzofen bei der Glasherstellung, insbesondere zum Aufschmelzen der Rohstoffe, wobei zur Verbrennungsluftvorwärmung mindestens ein Schüttgutregenerator (1,2,3) für Rauchgase (10) und/oder Frischgase (12) genutzt wird, wobei zwei Schüttgutregeneratoren (1,2) im Wechselbetrieb an einem Wärmeaustauschprozess arbeiten, wobei durch einen ersten Schüttgutregenerator (1) in einem Beladungsbetrieb (B) die Rauchgase (10) geleitet werden und durch einen zweiten Schüttgutregenerator (2) in einem Entladungsbetrieb (E) die Frischgase (12) geleitet werden,
**dadurch gekennzeichnet, dass** ein dritter Schüttgutregenerator (3) in einem Wartebetrieb (W) für eine Durchleitung von Rauch- oder Frischgasen (10,12) zuschaltfähig betrieben wird.

2. Verfahren nach Anspruch 1,
**dadurch gekennzeichnet, dass** jeder dieser Schüttgutregeneratoren (1,2,3) in jeder der Betriebsphasen (B, E, W)
- Beladungsbetrieb (B),
- Entladungsbetrieb (E) und
- Wartebetrieb (W)
betreibbar ist.

3. Verfahren nach einem der Ansprüche 1 oder 2,
**dadurch gekennzeichnet, dass** die Schüttgutregeneratoren (1,2,3) im Wechselbetrieb an einem Wärmeaustauschprozess arbeiten, wobei die Betriebsphasen (B,E,W) der Schüttgutregeneratoren (1,2,3) mit einem Wechselintervall (T) wie folgt gewechselt werden:
- der Schüttgutregenerator (1,2,3) im Beladungsbetrieb (B) wechselt in den Entladungsbetrieb (E),
- der Schüttgutregenerator (1,2,3) im Entladungsbetrieb (E) wechselt in den Wartebetrieb (W),
- der Schüttgutregenerator (1,2,3) im Wartebetrieb (W) wechselt in den Beladungsbetrieb (B).

4. Verfahren nach einem der Ansprüche 1 oder 2,
**dadurch gekennzeichnet, dass** einer der Schüttgutregeneratoren (1,2,3) in der Betriebsphase Wartebetrieb (W) betrieben wird und zwei Schüttgutregeneratoren solange im Wechselbetrieb (B,E) mit einem Wechselintervall (T) wie folgt gewechselt werden,
- der Schüttgutregenerator (1,2,3) im Beladungsbetrieb (B) wechselt in den Entladungsbetrieb (E),
- der Schüttgutregenerator (1,2,3) im Entladungsbetrieb (E) wechselt in den Beladungsbetrieb (B),
bis bei einer Umschaltbedingung (U) wie folgt gewechselt wird,
- der Schüttgutregenerator (1,2,3) im Entladungsbetrieb (E) wechselt in den Wartebetrieb (W),
- der Schüttgutregenerator (1,2,3) im Wartebetrieb (W) wechselt in den Beladungsbetrieb (B),
- der Schüttgutregenerator (1,2,3) im Beladungsbetrieb (B) wechselt in den Entladungsbetrieb (E).

5. Verfahren nach Anspruch 4,
**dadurch gekennzeichnet, dass** ein Druckunterschied zwischen den eingeleiteten Gasen (10) und den ausgeleiteten Gasen (14) im Schüttgutregenerator (1,2,3) oder in einer Zu- und/oder Ableitung gemessen und als Umschaltbedingung (U) für einen Wechsel der Betriebsphasen (B,E,W) genutzt wird.

6. Verfahren nach einem der Ansprüche 1 bis 5,
**dadurch gekennzeichnet, dass** das Wechselintervall (T) beim Wechselbetrieb (B,E,W) einige Minuten bis zu einigen Tagen beträgt, vorzugsweise weniger als 24 Stunden und/oder mehr als 5 Minuten.

7. Verfahren nach einem der Ansprüche 1 bis 6,
**gekennzeichnet durch** eine kontinuierliche Verbrennungsluftvorwärmung.

8. Verfahren nach einem der Ansprüche 1 bis 7,
**dadurch gekennzeichnet, dass** ein Schüttgutregenerator (1,2,3) Stäube und Asche zurückhält, wobei vorzugsweise keine gesonderte nachgeschaltete Filtereinrichtung oder Entstaubungsanlage verwendet wird, insbesondere kein elektrostatisches Filter, oder eine nachgeschaltete Entstaubungsanlage, deren Leistungsfähigkeit geringer ausgelegt ist als eine vergleichbare Filtereinrichtung bei einer Schüttgut freien Vorwärmkammer verwendet wird.

9. Verfahren nach einem der Ansprüche 1 bis 8,
**dadurch gekennzeichnet, dass** die Rauchgase (10) bis auf eine Temperatur kleiner als 200°C, vorzugsweise kleiner als 100°C, abgekühlt werden.

10. Verfahren nach Anspruch 9,
**dadurch gekennzeichnet, dass** eine Entstaubungsanlage genutzt wird, die für eine maximale Rauchgastemperatur von 200°C, vorzugsweise von maximal 100°C, ausgelegt ist.

11. Verfahren nach einem der Ansprüche 1 bis 10,
**dadurch gekennzeichnet, dass** zur Messung und/oder Regelung eines Restsauerstoffgehaltes und/oder eines Luftüberschusses, insbesondere der Falschluft, im Rauchgas (10) eine Lambda-Regelung genutzt wird.

12. Verfahren nach Anspruch 11,
**dadurch gekennzeichnet, dass** eine Lambdasonde, vorzugsweise eine Zirkonoxidsonde für den Hochtemperaturbereich, verwendet wird.

13. Verfahren nach Anspruch 12,
**dadurch gekennzeichnet, dass** die Lambdasonde in einem Kammertopf nach einem Brennraum angeordnet verwendet wird.

14. Verfahren nach einem der Ansprüche 1 bis 13,
**dadurch gekennzeichnet, dass** Mittel zur Beeinflussung (V1 bis V28, 32) der zugeführten Frischgasmenge (12) und/oder der abgeführten Rauchgasmenge (14) genutzt werden.

15. Verfahren nach einem der Ansprüche 1 bis 14,
**dadurch gekennzeichnet, dass** mit einer Brennstoffzusammensetzung eine Abgasanalyse ermittelt wird.

16. Verfahren nach einem der Ansprüche 1 bis 15,
**dadurch gekennzeichnet, dass** durch genau einen Schüttgutregenerator (1,2,3) oder durch eine Reihenschaltung und/oder eine Parallelschaltung von mehreren Schüttgutregeneratoren (1,2,3) die Rauchgase (10) und/oder Frischgase (12) geleitet werden.

17. Verfahren nach einem der Ansprüche 1 bis 16,
**dadurch gekennzeichnet, dass** als Schüttgutregenerator (1,2,3) ein Schüttgutregenerator (1,2,3) mit Mitteln (40,41,42) zur Reinigung des Schüttgutes (5) verwendet wird.

18. Verfahren nach einem der Ansprüche 1 bis 17,
**dadurch gekennzeichnet, dass** als Schüttgutregenerator (1,2,3) ein Schüttgutregenerator (1,2,3) mit Fördermitteln (34a,34b,34c) zum automatischen Rückführen von abgelassenen Schüttgut (5) verwendet wird.
